# EUROPEAN PATENT SPECIFICATION

(11) **EP 0 887 318 B1**
(45) Date of publication and mention of the grant of the patent: **27.09.2006**
(21) Application number: 98305070.9
(22) Date of filing: 26.06.1998
(51) Int. Cl.: C03B 37/012, C03B 29/14, C03B 29/00

(54) **Method and apparatus for separating an optical fiber preform by fusion**
Verfahren und Vorrichtung zum Abtrennen einer Vorform für optische Fasern mittels Schmelzen
Procédé et appareil pour la séparation par fusion d'une préforme pour fibre optique

(30) Priority: 27.06.1997 JP 17143997
(43) Date of publication of application: 30.12.1998
(73) Proprietor: Shin-Etsu Chemical Co., Ltd., Chiyoda-ku, Tokyo 100-0004 (JP)
(72) Inventor: Suzuki, Shinji, c/o Shin-Etsu Chemicals Co., Ltd., Annaka-Shi, gunma-Ken 379-0116 (JP); Hirasawa, Hideo, c/o Shin-Etsu Chemicals Co., Ltd., Annaka-Shi, gunma-Ken 379-0116 (JP); Shimada, Tadakatsu, Shin-Etsu Chemicals Co., Ltd., Annaka-Shi, gunma-Ken 379-0116 (JP)
(74) Representative: Senior, Alan Murray

(56) References cited:
- EP-A- 0 432 791
- EP-A- 0 519 479
- EP-A- 0 525 681
- EP-A- 0 612 700
- FR-A- 2 589 461
- GB-A- 2 307 907

## Description

This invention relates to a method and apparatus for making an optical fiber preform, and more particularly, to an improved method and apparatus for making an optical fiber preform wherein when a large-sized mother ingot for optical fiber is thermally drawn along a vertical direction into an intermediate preform which is separated to continuously obtain rods with a tapered portion at opposite sides thereof, deposition of a so-called silica cloud generated in the course of the separation by fusing can be well prevented.

An optical fiber preform is obtained by drawing an ingot to have a given diameter depending on a fiber drawing machine used. If the ingot has a bend, such a bend is corrected during the course of the drawing. Thereafter, a dammy glass is welded to the preform at opposite sides thereof, followed by drawing by use of a fiber drawing machine. The optical fiber made of silica glass and flawed in the surfaces thereof becomes very embrittled. Accordingly, if an optical fiber is flawed at the time of the fiber drawing of an optical fiber preform, strength lowers. For the purpose of suppressing the occurrence of flaws, fire polishing has been usually effected wherein after finishing with a given diameter, an optical fiber preform is exposed to a weak flame to remove foreign matter from the outer surfaces thereof.

As is known in the art, when a preform is heated until its surface temperature arrives at about 2000°C, part of the silica glass sublimates into SiO. This SiO combines with moisture present in a surrounding atmosphere and converts again to fine glass particles, followed by re-deposition on the surfaces of the preform. It is also known that when silica glass is separated by means of a flame, a so-called silica cloud appears just outside the strongly heated portion. This cloud has the possibility of flawing the fiber surfaces at the time of the fiber drawing. Thus, it is necessary that the cloud be removed prior to the fiber drawing. Measures to reduce the formation and re-deposition of these fine silica particles include the additional showing of an inert gas onto the preform being fire-polished (EP-A-0 432 791), using a plurality of burners in succession during fire-polishing (EP-A-0 612 700) or an oxidative, light-temperature plasma (FR-A-2 589 461). The cloud may also be removed by slowly heating the rod with a relatively weak flame. In this connection, however, the heating of the preform may become inadequate depending on the amounts of gases used and the moving speed of a burner. This leads to a great strain being left in the preform, with the great possibility that only a slight degree of impact applied to the preform results in cracking. On the other hand, when the preform is heated to an extent greater than required, a residual strain becomes small, but with the re-appearance of a band-shaped cloud.

To avoid this, it is usual to measure a residual strain by use of a strain gauge and determine fire polishing conditions in such a way that gas conditions and burner moving speed conditions, under which a residual strain is at a level involving no problem therein, and also gas conditions and burner moving speed conditions, which are determined by appearance inspection, are determined by trial and error. As a matter of course, these conditions differ depending on the diameter of a preform and the nature of individual burner. Accordingly, the work for determining these conditions has, in fact, required much labor and time. In addition, in view of the results of the determination of these conditions, it is required that in order not to cause any cloud to develop, a relatively weak flame be used so that the surface temperature of a preform is not raised and that in order to make a small residual strain, the moving speed of a burner be low sufficient to permit heat to be satisfactorily transmitted to the inside of a preform. These requirements need much time. More particularly, to separate a preform in a conventional flame fusing manner allows a silica cloud to be deposited and once again requires fire polishing at a final stage. The work of determining the final-stage fire polishing further requires much time and labor.

It is therefore an aim of the invention to provide a method for separating an intermediate preform while reducing or preventing deposition of a silica cloud generated at the time of heating the preform in a fusing step of a continuous process of manufacturing preform rods with a tapered portion at opposite sides thereof by drawing a large-sized mother ingot in an electric furnace in a vertical direction and subsequently separating the drawn intermediate preform by flame fusing.

It in another aim of the invention to provide an apparatus for separating an intermediate preform whereby a silica cloud deposited on a tapered portion at opposite sides of optical fibre preforms can be reduced or prevented.

According to one embodiment of the invention, a method of separating an intermediate preform which has been obtained by drawing a large-sized mother ingot along a vertical direction under heating conditions to form an optical fiber preform having tapered portions at opposite ends, said method comprising separating the intermediate preform by flame fusing while blowing an oxidative gas against the intermediate preform in the vicinity of the impingement of the flame of a fusing burner, the oxidative gas being blown from above and below said fusing burner whereby a silica cloud, generated during the course of fusing, is prevented from depositing on the tapered portions of the optical fiber preform.

According to another embodiment of the invention, an apparatus for forming an optical fiber preform, which apparatus, comprises a drawing unit having: a rotary chuck; a feeding means for feeding a mother ingot into an electric furnace; and a drawing chuck for drawing said mother ingot into an intermediate preform, and a fusing unit for separating by fusing an intermediate preform produced by said drawing unit; wherein said fusing unit includes: a fusing chuck for passing an intermediate preform along a direction; and a plurality of nozzles located along said direction, before and after a fusing burner; said plurality of nozzles being capable of blowing, in the vicinity of impingement of the flame of said fusing burner, an oxidative gas against an intermediate preform being drawn at a blow angle, θ, relative to said direction, which is in the range of 20°≤θ≤60°.

The invention will be described below with reference to an exemplary embodiment and the accompanying drawings, in which:-
Fig. 1 is a schematic longitudinal sectional view illustrating an apparatus for separating an intermediate preform according to the invention; and
Fig. 2 is a schematic, enlarged, longitudinal sectional view showing a part of a fusing unit of the apparatus of Fig. 1.

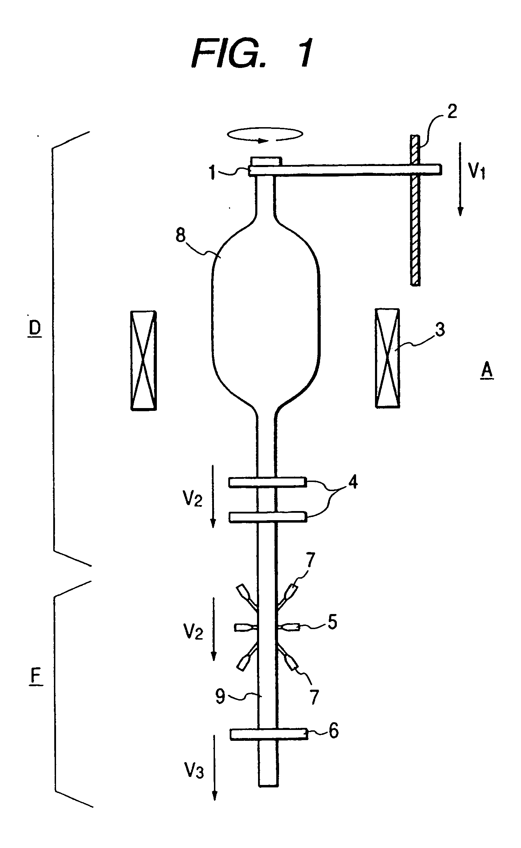

Reference is now made to the accompanying drawings and particularly, to Fig. 1. In Fig. 1, there is shown an apparatus A of manufacturing a preform. The apparatus A includes a drawing unit D and a fusing unit F. The drawing unit D has a rotary chuck 1, a feed mechanism 2, an electric furnace 3, and a drawing chuck 4 as shown. The fusing mechanism F includes fusing burners 5, a chuck 6 and nozzles 7 for preventing deposition of a silica cloud.

In operation, a mother ingot 8 made of silica glass is fixedly attached to the rotary chuck 1 and fed to the electric furnace 3 by means of the feed mechanism 2 at a feed rate V₁. In the furnace 3, the ingot is heated and softened, under which it is drawn by movement of the drawing chuck 4 at a take-up rate V₂. The resultant (intermediate) preform 9, being moved at the rate of V₂ by means of a fusing chuck 6 at a fusing rate V₃, is separated by flame fusion to a given length to obtain a product rod (optical fibre preform). At this time, the fusing burners 5 and the nozzles 7 are both moved at the rate of V₂, which is equal to the take-up rate, while blowing an oxidative gas against the preform being drawn. The rates V₁, V₂ and V₃ should be so set that V₂>V₁ and V₃>V₂.

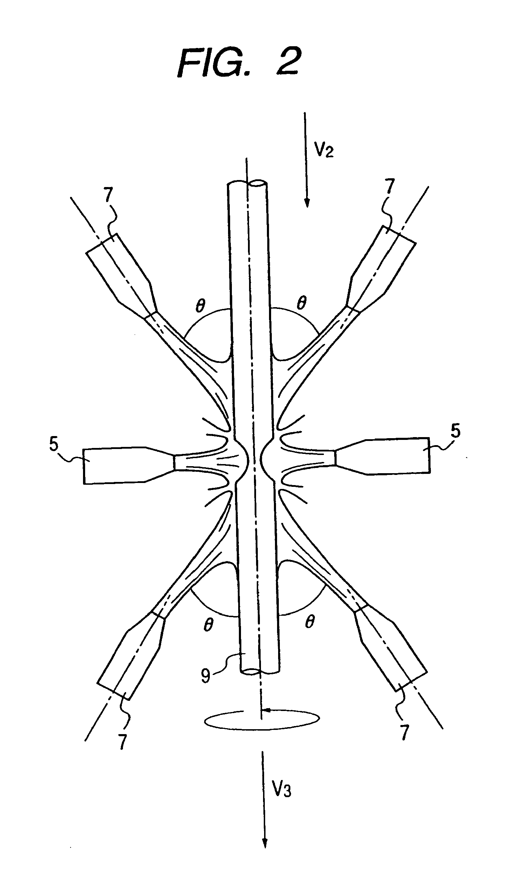

Fig. 2 is a view showing the detail of part of the fusing unit F of the apparatus A, with which the preform 9 is separated by flame fusing into product rods having a given length. As will be seen from the Figure, two fusing burners are located in face-to-face relation via the preform 9, and four nozzles 7 are each arranged at a preset angle, θ, between the flow of an oxidative gas and the preform being drawn. This angle should be in the range of 20°≤θ≤60°. If this blowing angle is less than 20°, the nozzles may contact the preform being rotated in view of the structural arrangement of the apparatus. On the other hand, when the angle exceeds 60°, a greater amount of a gas used to the blowing may be necessary for attaining a deposition-preventing effect similar to that attained at the defined angle.

It is known that the sublimation of silica glass proceeds rapidly in a reductive atmosphere. In contrast, the sublimation of SiO can be suppressed when a heating atmosphere consists of an oxidative gas. Examples of the oxidative gas used in the practice of the invention includes oxygen, air, or an oxygen-rich oxyhydrogen flame. The amount of a gas being blown against the preform is in the range of 1/5 to 1/2 of the amount of a gas supplied to the fusing burner. If the amount is smaller, a satisfactory deposition preventing effect may not be expected. On the other hand, if the amount is in excess, the burner flame may be undesirably disturbed, causing the preform to be heated unsatisfactorily.

It will be noted that smaller-size burners may be used as the nozzles.

In the method of the invention wherein product rods having a tapered portion at opposite sides thereof can be continuously manufactured by thermally drawing, into a preform, a large-sized silica glass ingot 8 having an outer diameter, for example, of 100 to 300 mm in a electric furnace 3 in a vertical direction, and subsequently separating by flame fusion, an oxidative gas is blown against the preform from upper and lower directions of fusing burners 5. As described before, when the surface temperature of the preform arrives at about 2000°C, part of the silica glass is sublimated into SiO. This SiO combines with moisture in a surrounding atmosphere and redeposited on the preform surface in the form of fine particles of silica. To avoid this, an oxidative gas is blown against the preform from upper and lower directions of the burner flame to blow the SiO off. Thus, the re-deposition of glass fine particles is prevented.

The invention is more particularly described by way of examples.

### Example 1

Using an apparatus of the type shown in Fig. 1, a mother ingot having an outer diameter of 150 mm was attached to a rotary chuck, and drawn into an intermediate preform having an outer diameter of 60 mm at a feed rate of V₁, of 20 mm/minute, a take-up rate, V₂, of 125 mm/minute, and a fusing chuck take-up rate, V₃, of 150 mm. Two fusing burners of a fusing unit were arranged and opposed at an angle of 180°, and two small-size gas burner nozzles were, respectively, set at upper and lower positions relative to the fusing burners so that two burner nozzles at each position were opposed at an angle of 180°, with an angle of blowing against the preform being at 50°.

H₂ and O₂ gases were fed to the fusing burners at rates of 400 liters/minute of H₂ and 230 liters/minute of O₂. For the prevention of silica deposition, 150 liters/minute of O₂ was fed to each burner nozzle.

The resultant preform pieces had a length of about 1000 mm and an outer diameter of 60 mm, on which no silica cloud was deposited. Thus, any finishing fire polishing was not necessary, resulting in the significant reduction of time. Moreover, a residual strain was slightly observed, but at a level of no problem.

### Example 2

The general procedure of Example 1 was repeated using the same drawing conditions as in Example 1, except that H₂ and O₂ were passed to the fusing burners at rates of 400 liters/minute and 230 liters/minute, respectively, and air was passed to the respective small-size gas burner nozzles at a rate of 150 liters/minute and blown against the preform at a blowing angle of 30°. As a result, no silica deposition was found on the resultant preform products having an outer diameter of 60 mm, with similar results as in Example 1.

### Example 3

The general procedure of Example 1 was repeated using the same drawing conditions as in Example 1, except that H₂ and O₂ were passed to the fusing burners at rates of 400 liters/minute and 230 liters/minute, respectively, and an oxyhydrogen flame in an oxygen-rich condition was blown against the preform at a blowing angle of 30° while passing 100 liters/minute of H₂ and 60 liters/minute of O₂ to each small-size gas burner nozzle. As a result, no deposition of silica cloud was found on preform products having an outer diameter of 60 mm, with similar results as in Example 1. Moreover, no residual strain was found in the products.

## Claims

1. A method of separating an intermediate preform which has been obtained by drawing a large-sized mother ingot along a vertical direction under heating conditions to form an optical fiber preform having tapered portions at opposite ends, said method comprising separating the intermediate preform (9) by flame fusing while blowing an oxidative gas against the intermediate preform in the vicinity of the impingement of the flame of a fusing burner, the oxidative gas being blown from above and below said fusing burner (5) whereby a silica cloud, generated during the course of fusing, is prevented from depositing on the tapered portions of the optical fiber preform.

2. A method according to Claim 1, wherein said oxidative gas is blown against said intermediate preform (9) at a blow angle, θ, relative to a longitudinal axis of said intermediate preform, which is in the range of 20°≤θ≤60°.

3. A method according to claim 2, wherein said oxidative gas consists essentially of oxygen.

4. A method according to claim 2, wherein said oxidative gas consists essentially of air.

5. A method according to claim 2, wherein said oxidative gas consists essentially of an oxyhydrogen flame in an oxygen-rich condition.

6. A method according to any one of claims 1 to 5, wherein said oxidative gas is blown by use of a plurality of burner nozzles (7).

7. A method according to any one of the preceding claims, wherein said oxidative gas is fed at a rate of 1/5 to 1/2 of a flow rate of a combustible gas mixture fed to said fusing burner (5).

8. A method according to any one of the preceding claims, wherein when an ingot feed rate is taken as V₁, a preform take-up rate as V₂, and a fusing rate as V₃, V₂>V₁ and V₃>V₂.

9. A method according to any one of the preceding claims, wherein said drawing and said separating are carried out continuously.

10. An apparatus for forming an optical fiber preform, which apparatus, comprises: a drawing unit (D) having:
a rotary chuck (1);
a feeding means (2) for feeding a mother ingot (8) into an electric furnace (3); and
a drawing chuck (4) for drawing said mother ingot (8) into an intermediate preform (9), and
a fusing unit (F) for separating by fusing an intermediate preform produced by said drawing unit (D);
wherein said fusing unit (F) includes:
a fusing chuck (6) for passing an intermediate preform along a direction; and
a plurality of nozzles (7) located along said direction, before and after a fusing burner (5);
said plurality of nozzles (7) being connected to a source of oxidative gas and thus capable of blowing, in the vicinity of impingement of the flame of said fusing burner, an oxidative gas against an intermediate preform (9) being drawn at a blow angle, θ, relative to said direction, which is in the range of 20°≤θ≤60°.

11. An apparatus according to Claim 10, wherein said plurality of nozzles (7) are each comprised of a small-size burner.

12. An apparatus according to claim 10 or 11, wherein said fusing unit (F) and said drawing unit (D) are arranged so that said drawing chuck is for drawing an intermediate preform in said direction thereby to allow continuous forming of optical fibre preforms.

13. A method of manufacturing an optical fiber or a device including optical fibers, the method including forming an intermediate preform according to the method of any one of claims 1 to 9.

## Patentansprüche

1. Verfahren zum Trennen eines Zwischen-Vorformlings, der erhalten worden ist, indem ein groß bemessener Ausgangsblock längs einer vertikalen Richtung unter Heizbedingungen gezogen wird, um einen Vorformling einer optischen Faser mit verjüngten Abschnitten an seinen entgegengesetzten Enden zu bilden, wobei das Verfahren umfasst, dass der Zwischen-Vorformling (9) durch Flammschmelzen getrennt wird, während ein oxidatives Gas gegen den Zwischen-Vorformling in der Nähe des Auftreffpunktes der Flamme eines Schneidbrenners geblasen wird, wobei das oxidative Gas von oberhalb und unterhalb des Schneidbrenners (5) geblasen wird, wodurch verhindert wird, dass sich eine Silikawolke, die im Verlaufe des Schmelzens erzeugt wird, auf den verjüngten Abschnitten des Vorformlings der optischen Faser abscheidet.

2. Verfahren nach Anspruch 1, wobei das oxidative Gas gegen den Zwischen-Vorformling (9) unter einem Blaswinkel θ, der im Bereich von 20° ≤ θ ≤ 60° liegt, relativ zur Längsachse des Zwischen-Vorformlings geblasen wird.

3. Verfahren nach Anspruch 2, wobei das oxidative Gas im Wesentlichen aus Sauerstoff besteht.

4. Verfahren nach Anspruch 2, wobei das oxidative Gas im Wesentlichen aus Luft besteht.

5. Verfahren nach Anspruch 2, wobei das oxidative Gas im Wesentlichen aus einer Wasserstoff-Sauerstoff-Flamme in einem sauerstoffreichen Zustand besteht.

6. Verfahren nach einem der Ansprüche 1 bis 5, wobei das oxidative Gas durch die Verwendung einer Vielzahl von Brennerdüsen (7) geblasen wird.

7. Verfahren nach einem der vorhergehenden Ansprüche, wobei das oxidative Gas mit einer Rate von 1/5 bis 1/2 einer Durchströmrate eines dem Schneidbrenner (5) zugeführten brennbaren Gasgemisches zugeführt wird.

8. Verfahren nach einem der vorhergehenden Ansprüche, wobei, wenn eine Blockvorschubgeschwindigkeit als V₁ genommen wird, eine Vorformling-Aufnahmegeschwindigkeit als V₂ genommen wird, und eine Schmelzgeschwindigkeit als V₃ genommen wird, V₂ > V₁ und V₃ > V₂.

9. Verfahren nach einem der vorhergehenden Ansprüche, wobei das Ziehen und das Trennen kontinuierlich ausgeführt werden.

10. Vorrichtung zum Bilden eines Vorformlings einer optischen Faser,
wobei die Vorrichtung umfasst: eine Zieheinheit (D) mit:
einem Drehspannfutter (1);
einem Vorschubmittel (2) zum Vorschieben eines Ausgangsblocks (8) in einen elektrischen Ofen (3);
einem Ziehspannfutter (4) zum Ziehen des Ausgangsblocks (8) zu einem Zwischen-Vorformling (9), und
einer Schmelzeinheit (F) zum Trennen eines Zwischen-Vorformlings, der durch die Zieheinheit (D) hergestellt wird, durch Schmelzen;
wobei die Schmelzeinheit (F) umfasst:
ein Schmelzspannfutter (6) zum Überführen eines Zwischen-Vorformlings entlang einer Richtung; und
eine Vielzahl von Düsen (7), die entlang der Richtung vor und nach einem Schneidbrenner (5) angeordnet sind;
wobei die Vielzahl von Düsen (7) mit einer Quelle für oxidatives Gas verbunden sind und somit in der Lage sind, ein oxidatives Gas gegen einen Zwischen-Vorformling (9), der gezogen wird, in die Nähe des Auftreffpunktes der Flamme des Schneidbrenners, unter einem Blaswinkel θ, der im Bereich von 20° ≤ θ ≤ 60° liegt, relativ zu der Richtung zu blasen.

11. Vorrichtung nach Anspruch 10, wobei die Vielzahl von Düsen (7) jeweils aus einem Brenner mit kleiner Größe bestehen.

12. Vorrichtung nach Anspruch 10 oder 11, wobei die Schmelzeinheit (F) und die Zieheinheit (D) derart angeordnet sind, dass das Ziehspannfutter dazu dient, den Zwischen-Vorformling in die Richtung zu ziehen, wodurch ein kontinuierliches Bilden des Vorformlings der optischen Faser durchgeführt werden kann.

13. Verfahren zum Herstellen einer optischen Faser oder einer Einrichtung, die optische Fasern umfasst, wobei das Verfahren umfasst, dass ein Zwischen-Vorformling gemäß dem Verfahren nach einem der Ansprüche 1 bis 9 gebildet wird.

## Revendications

1. Procédé de séparation d'une préforme intermédiaire que l'on a obtenue par étirage d'un lingot matrice de grande taille le long d'une direction verticale dans des conditions de chauffage pour former une préforme de fibre optique dotée de portions effilées à ses extrémités opposées, ledit procédé comprenant la séparation de la préforme intermédiaire (9) par fusion à la flamme alors qu'un gaz oxydant souffle contre la préforme intermédiaire au voisinage de la portée de la flamme d'un chalumeau coupeur, le gaz oxydant étant soufflé par dessus et par dessous ledit chalumeau coupeur (5), moyennant quoi on empêche qu'un nuage de silice, produit au cours de la fusion, ne se dépose sur les parties effilées de la préforme de fibre optique.

2. Procédé selon la revendication 1, **caractérisé en ce que** ledit gaz oxydant est soufflé contre ladite préforme intermédiaire (9) selon un angle de soufflage, θ, par rapport à un axe longitudinal de ladite préforme intermédiaire, cet angle étant compris entre 20° et 60°C.

3. Procédé selon la revendication 2, **caractérisé en ce que** ledit gaz oxydant est essentiellement constitué d'oxygène.

4. Procédé selon la revendication 2, **caractérisé en ce que** ledit gaz oxydant est essentiellement constitué d'air.

5. Procédé selon la revendication 2, **caractérisé en ce que** ledit gaz oxydant est essentiellement constitué d'une flamme oxyhydrique dans un état enrichi en oxygène.

6. Procédé selon l'une quelconque des revendications 1 à 5, **caractérisé en ce que** ledit gaz oxydant est soufflé à l'aide d'une pluralité de becs de chalumeau (7).

7. Procédé selon l'une quelconque des revendications précédentes, **caractérisé en ce que** ledit gaz oxydant est introduit à une vitesse comprise entre 1/5 et 1/2 du débit d'un mélange de gaz combustible introduit dans ledit chalumeau coupeur (5).

8. Procédé selon l'une quelconque des revendications précédentes, **caractérisé en ce que** quand on choisit une vitesse d'alimentation V₁, une vitesse de prise de préforme V₂ et une vitesse de fusion V₃, V₂>V₁ et V₃>V₂.

9. Procédé selon l'une quelconque des revendications précédentes, **caractérisé en ce que** ledit étirage et ladite séparation ont lieu de manière continue.

10. Appareil permettant de former une préforme de fibre optique, cet appareil comprenant une unité d'étirage (D) comportant :
un mandrin rotatif (1) ;
un moyen d'alimentation (2) permettant d'introduire un lingot matrice (8) dans un four électrique (3) ; et
un mandrin de retrait (4) permettant d'étirer ledit lingot matrice (8) sous une forme intermédiaire (9),
et une unité de fusion (F) permettant de séparer par fusion une préforme intermédiaire produite par ladite unité d'étirage (D) ;
appareil dans lequel ladite unité de fusion (F) inclut :
un mandrin de fusion (6) permettant de faire passer une préforme intermédiaire le long d'une certaine direction ;
et une pluralité de tuyères (7) situées le long de ladite direction, avant et après un chalumeau coupeur (5) ;
ladite pluralité de tuyères (7) étant connectée à une source de gaz oxydant et étant donc capable de souffler, au voisinage de la portée de la flamme dudit chalumeau coupeur, un gaz oxydant contre une préforme intermédiaire (9) que l'on étire selon un angle de souffle θ par rapport à ladite direction, cet angle étant compris entre 20 et 60°.

11. Appareil selon la revendication 10, dans lequel ladite pluralité de tuyères (7) est composée de plusieurs chalumeaux de petite taille.

12. Appareil selon la revendication 10 ou 11, dans lequel ladite unité de fusion (F) et ladite unité d'étirage (D) sont disposées de façon à ce que ledit mandrin d'étirage permet d'étirer une préforme intermédiaire dans ladite direction, ce qui permet un formage continu de préformes de fibre optique.

13. Procédé de fabrication d'une fibre optique ou d'un dispositif contenant des fibres optiques, le procédé comprenant la formation d'une préforme intermédiaire selon le procédé de l'une quelconque des revendications 1 à 9.
